# EUROPEAN PATENT APPLICATION

(11) **EP 3 879 385 A1**
(43) Date of publication of application: **15.09.2021**
(21) Application number: 20162619.9
(22) Date of filing: 12.03.2020
(51) Int. Cl.: G06F 3/01, G02B 27/01

(54) **HEAD-MOUNTABLE USER EQUIPMENT**

(71) Applicant: Deutsche Telekom AG, 53113 Bonn (DE)
(72) Inventor: VAN DEN BERGE, Fridtjof, 53227 Bonn-Oberkassel (DE)
(74) Representative: Raible Deissler Lehmann Patentanwälte PartG mbB

(57) **Abstract**

A user equipment, comprising a radio interface unit for a wireless connection, a human machine interface unit for interacting with a user, the human machine interface unit having a screen for displaying digital data to be seen by the user, a control unit for operating the radio interface unit and the human machine interface unit, the control unit being operatively connected to the radio interface unit and the human machine interface, and a frame supporting the radio interface unit, the human machine interface unit and the control unit, and a method for operating a user equipment.

## Description

The invention relates to a user equipment, comprising a radio interface unit for a wireless connection, a human machine interface (HMI) unit for interacting with a user, the human machine interface unit having a screen for displaying digital data to be seen by the user, a control unit for operating the radio interface unit and the human machine interface unit, the control unit being operatively connected to the radio interface unit and the human machine interface, a frame supporting the radio interface unit, the human machine interface unit and the control unit.

User equipments of the above-mentioned kind are known in many various embodiments and are widely used as mobile computing and communication devices, e.g. smartphones, tablets and the like. However, conventional user equipments suffer from attracting too much of a user's attention. Hence, they cannot be used or are not allowed to be used in certain situations, e.g. while driving a car. Apart from that, they usually require at least one hand, mostly both hands, of the user for being operated. As a consequence, the user's hand is prevented from doing other things while operating the user equipment.

It is, therefore, an object of the invention to provide a user equipment which attracts less attention of a user and leaves hands of the user free during usage thereof. It is another object of the invention to suggest a method for operating a user equipment.

One aspect of the invention is a user equipment, comprising a radio interface unit for a wireless connection, a human machine interface unit for interacting with a user, the human machine interface unit having a screen for displaying digital data to be seen by the user, a control unit for operating the radio interface unit and the human machine interface unit, the control unit being operatively connected to the radio interface unit and the human machine interface, a frame supporting the radio interface unit, the human machine interface unit and the control unit, and at least one glass defining a field of view of the user equipment, the frame supporting the at least one glass and being configured for arranging the at least one glass in front of an eye of the user. The user equipment is similar to data glasses or data goggles.

According to the invention, the user equipment comprises at least one glass defining a field of view of the user equipment, the frame supporting the at least one glass and being configured for arranging the at least one glass in front of an eye of the user, a partially reflective lens for reflecting the screen to the eye of the user, wherein the screen is swivel-mounted to the frame and swiveling between an active screen position with a virtual image of the reflected screen overlaying the field of view when the glass is arranged in front of the eye and an inactive screen position with the virtual image of the reflected screen being outside the field of view. The user equipment, thus, may be optionally used either as conventional glasses or as data glasses. The user equipment is configured to be a head-mounted device, particularly a wearable smartphone, leaving hands of the user free during usage. The screen of the user equipment may correspond to a display of a conventional smartphone.

In some embodiments the at least one glass is configured to be the partially reflective lens. In other words, the at least one glass provides a partial reflectivity for reflecting the screen. The double function of the at least one glass provides both a small part count of the user equipment and a low mechanical complexity of the user equipment. A low mechanical complexity may facilitate handling of the user equipment, increase a life time of the user equipment and decrease a risk of failure of the user equipment.

In alternative embodiments, the partially reflective lens is separate from the at least one glass, swivel-mounted to the frame and swivelling between an active lens position and an inactive lens position corresponding to the active screen position and the inactive screen position, respectively. In the active lens position, the partially reflective lens is arranged between the eye of the user and the at least one glass. Accordingly, the viewing direction of the user passes the partially reflective lens.

Preferably, the partially reflective lens has a reflective coating and/or a protective coating, the reflective coating and/or the protective coating being provided on a surface of the partially reflective lens facing the field of view. The reflective coating prevents the digital data to be seen from other persons facing the user wearing the user equipment. The reflective coating gives the partially reflective lens a mirrored appearance. The reflective coating ensures a privacy of the digital data displayed by the screen and, thus, supports data protection according to legal provisions. It is noted that the reflective coating is different from the partial reflectivity provided by the lens for reflecting light emitted by the screen into the eye of the user. The protective coating may protect the lens from a damage caused by mechanical impact, e.g. from scratches or cracks.

In advantageous embodiments, the user equipment comprises a pair of glasses being supported by the frame and being arranged next to each other, the frame being a glasses frame having a bridge for abutting a nose of the user. The user equipment is configured as conventional glasses to be supported by the nose of the user.

In another embodiment, the human machine interface has a microphone for detecting a voice utterance, the microphone being supported by the frame. The microphone enables the user equipment for being acustically operated by the user. Apart from that, the microphone may be configured for recording an environmental sound or noise, e.g. traffic noise, a vocal performance, a conversation, a speech and the like.

Moreover, the human machine interface may have a loudspeaker or the like for generating sounds to be heard by the user. The loudspeaker may be arranged on an earpiece of the frame or configured as an earplug.

Additionally or alternatively, the human machine interface may have an eye tracking unit for detecting a viewing direction of the user, the eye tracking unit being supported by the frame. The eye tracking unit is configured to signal the detected viewing direction of the user to the control unit.

The control unit is preferably configured to swivel the screen dependent on the detected viewing direction. Thus, the screen is enabled to always follow the view of the user. The user sees the displayed digital data independently of a viewing direction of the eyes as long as the viewing direction passes the glass and does not leave the field of view.

In these embodiments, the human machine interface unit may comprise an electric motor for swivelling the screen with respect to the frame, the electric motor linking the screen and the frame and/or an electromagnet for swivelling the partially reflective lens with respect to the frame. The electric motor allows the screen to be swivelled automatically. The electromagnet provides a magnetic field applying a magnetic force to the reflective lens which allows for a noncontact operation of the reflective lens.

Advantageously, the control unit has an embedded subscriber identification module (eSIM) for a cellular network and/or the radio interface unit is configured for connecting to a cellular network and/or for connecting to a Bluetooth device and/or for a near field communication. The eSIM may be easily integrated within the control unit and, hence, a separate SIM card is not required. Therewith, handling of the user equipment is facilitated. It is noted that the control unit is not limited to an embedded eSIM and may have any embedded authentication means for any radio access network.

The Bluetooth connectivity allows for easily connecting the user equipment with a NFC capable device or a Bluetooth device worn by the user, e.g. a smart watch or sensoric clothing. As a result, the NVC capable device or the Bluetooth device extents the human machine interface unit of the user equipment allowing for additional ways of operating the user equipment. For instance, the user equipment may be operable by the user simply moving a part of the body.

The radio interface unit may further be configured for connecting to a WLAN router and/or for being connected to as a WLAN router. The connection to the WLAN router provides an alternative access to the internet cloud. The WLAN connection may be used where a radio access network is not accessible or in order to save download costs or upload costs caused by using a radio access network.

In other embodiments, the user equipment comprises a camera for capturing an image of the field of view and/or a GPS unit for detecting a geographical position. The images captured by the camera are very similar to the views seen by the user. The GPS (Global Positioning System) unit allows for localizing every captured image, i.e. providing every captured image Instead, the camera comprises any sensor detecting electromagnetic waves and providing an image of the field of view defined by the user equipment or even a surrounding of the user wearing the user equipment, e.g. an infrared camera or a radar sensor.

Another object of the invention is a method for operating a user equipment, comprising the following steps. A user equipment according to the invention is worn by a user and the radio interface unit of the user equipment establishes a wireless connection. The screen of the human machine interface unit of the user equipment is swivelled to the active screen position due to an activating user action or due to a triggering event provided by an internet cloud via the wireless connection. The screen displays digital data provided by the internet cloud. The screen is swivelled to the inactive screen position due to an inactivating user action or due to a time-out. For instance, an incoming telephone call or breaking news may be the triggering event. In short, the user equipment optionally is operated as a wearable smartphone. When the user equipment is not operated like this, it may be used as conventional glasses.

In many embodiments, the partially reflective lens of the user equipment is swivelled to the active lens position and to the inactive lens position, respectively, in a synchronity with the swivelling screen. Due to the synchronized swivelling of the screen and the partially reflective lens the glass is prevented from unintentionally reflecting light emitted by the screen into the eye of the user.

Preferably, the user equipment is operated by an eye movement defining a viewing direction of the user and being detected by the eye tracking unit of the user equipment and/or by a muscle action being detected by a sensoric clothing worn by the user and being wirelessly connected to the user equipment. Operating the user equipment is both silent and robust against an influence of a surrounding of the user, e.g. a noise and the like. Apart from that, hands of the user are left free from any operating activity during usage.

It is an essential advantage of the user equipment according to the invention that it may be used like a conventional smartphone without requiring a hand of a user for being operated. Another advantage of the inventive user equipment is an ease of handling which does not exceed a handling of conventional glasses.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.
- Fig. 1: schematically shows a perspective view of a user equipment according to an embodiment of the invention;
- Fig. 2: schematically shows a partial lateral view of the user equipment shown in fig. 1;
- Fig. 3: schematically shows an enlarged view of a detail of the user equipment shown in fig. 2.

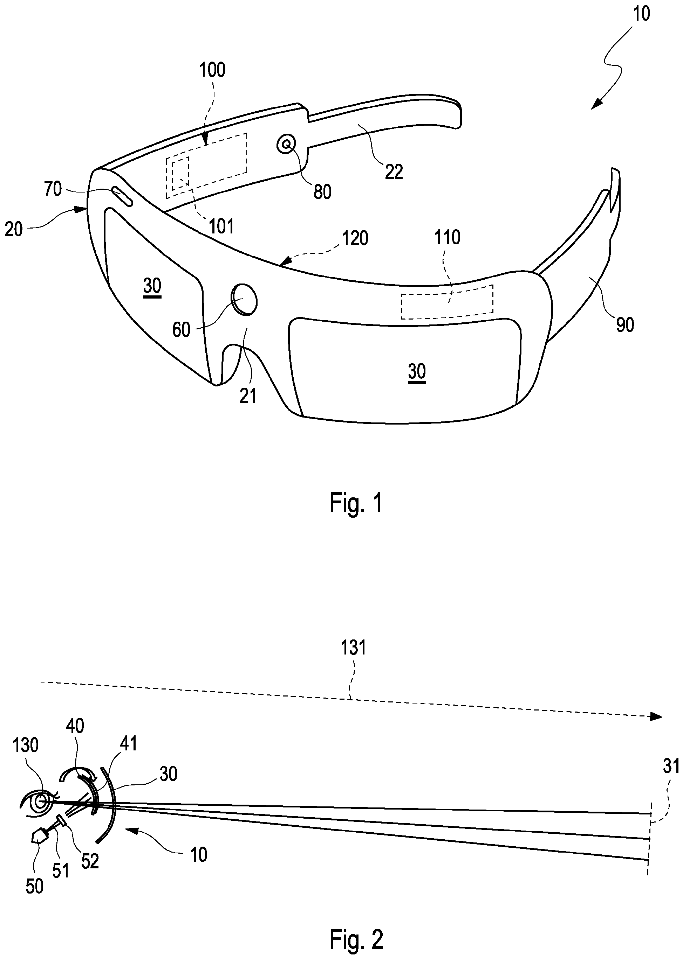

Figure 1 schematically shows a perspective view of a user equipment according 10 to an embodiment of the invention.

The user equipment 10 comprises a radio interface unit 90 for a wireless connection. The radio interface unit 90 is preferably configured for at least one of connecting to a cellular network and connecting to a Bluetooth device and a near field communication. The radio interface unit 90 may be further configured for connecting to a WLAN router and/or for being connected to as a WLAN router.

The user equipment 10 comprises also a human machine interface (HMI) unit for interacting with a user. The human machine interface unit has a screen 50 for displaying digital data, e.g. text content or multimedia content, to be seen by the user. The human machine interface unit further has a microphone 70 for detecting a voice utterance of the user, a loudspeaker 80 for generating a sound for an ear of the user and an eye tracking unit 120 (hidden by the frame) for detecting a viewing direction 131 of the user.

The user equipment 10 preferably comprises a camera 60 for capturing an image of a field of view 31 and/or a GPS unit 110 for detecting a geographical position of the user equipment.

Furthermore, the user equipment 10 comprises a control unit 100 for operating the radio interface unit 90 and the human machine interface unit. The control unit 100 has an embedded subscriber identification module (eSIM) 101 for a cellular network and is operatively connected to the camera 60, radio interface unit 90, the GPS unit 110 and the human machine interface.

The user equipment 10 comprises a pair of glasses 30 being arranged next to each other and defining the field of view 31 of the user equipment 10 and a frame 20. The frame 20 is a glasses frame being configured for arranging each glass 30 in front of an eye 130 of the user. Generally, the user equipment has at least one glass 30.

The frame 20 has a bridge 21 for abutting a nose of the user and two earpiedes 22 for abutting either ear of the user and supports the glasses 30, the camera 60, the radio interface unit 90, the control unit 100, the GPS unit 110 and the human machine interface unit with the screen 50, the microphone 70, the loudspeaker 80. The camera 60, the radio interface unit 90, the control unit 100, the GPS unit 110 and the microphone 70, the loudspeaker 80 and the eye tracking unit 120 of the human machine interface unit are integrated within the frame 20.

Figure 2 schematically shows a partial lateral view of the user equipment 10 shown in figure 1.

The user equipment 10 has a partially reflective lens 40 for reflecting the screen 50, i.e. emitted light 51 having been emitted by the screen 50 and having passed imaging optics 52 of the user equipment 10, to the eye 130 of the user. The partially reflective lens 40 may have a reflective coating 41 and/or a protective coating. The reflective coating 41 and/or the protective coating are provided on a surface of the partially reflective lens 40 facing the field of view 31.

The screen 50 is swivel-mounted to the frame 20 and swiveling between an active screen position with a virtual image of the reflected screen 50 overlaying the field of view 31 when the glasses 30 are arranged in front of the eyes 130 and an inactive screen position with the virtual image of the reflected screen 50 being outside the field of view 31. The human machine interface unit comprises an electric motor (not shown) for swivelling the screen 50 with respect to the frame 20, the electric motor linking the screen 50 and the frame 20. The electric motor is operatively connected to the control unit 100.

The partially reflective lens 40 is separate from the glasses 30, swivel-mounted to the frame 20 and swivelling between an active lens position and an inactive lens position corresponding to the active screen position and the inactive screen position, respectively. Figure 2 illustrates the active lens position. The human machine interface unit has an electromagnet (not shown) for swivelling the partially reflective lens 40 with respect to the frame 20. The electromagnet is operatively connected to the control unit 100.

The control unit 100 is configured to swivel the screen 50 and the partially reflective lens 40 dependent on the detected viewing direction 131.

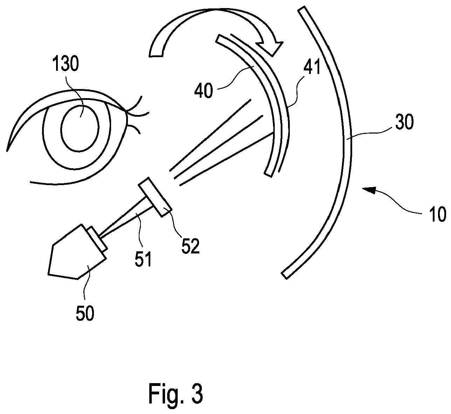

Figure 3 schematically shows an enlarged view of a detail of the user equipment 10 shown in figure 2.

The user equipment 10 may be operated as follows. The user equipment 10 is worn by a user and the radio interface unit 90 of the user equipment 10 establishes a wireless connection to a cellular network.

The screen 50 of the human machine interface unit of the user equipment 10 is swivelled to the active screen position due to an activating user action or due to a triggering event provided by an internet cloud via the wireless connection.

The user action may be an eye 130 movement defining the viewing direction 131 of the user and being detected by the eye tracking unit 120 of the user equipment 10 or a muscle action, e.g. a movement of a body part, being detected by a sensoric clothing worn by the user and being wirelessly connected, e.g. via NFC or via a Bluetooth connection, to the user equipment 10. The triggering event may be an incoming telephone call or breaking news.

The partially reflective lens 40 of the user equipment 10 is swivelled to the active lens position and to the inactive lens position, respectively, in a synchronity with the swivelling screen 50.

The screen 50 displays digital data provided by the internet cloud. The displayed digital data, for instance, is related to the incoming telephone call or the breaking news.

The screen 50 is swivelled to the inactive screen position due to an inactivating user action or due to a time-out when the there is no user action or triggering event for a predetermined time interval.

In an alternative embodiment the at least one glass 30 may be configured to be the partially reflective lens 40.

### Reference numerals

- 10: user equipment
- 20: frame
- 21: bridge
- 22: earpiece
- 30: glass
- 31: field of view
- 40: partially reflective lens
- 41: reflective coating
- 50: screen
- 51: emitted light
- 52: imaging optics
- 60: camera
- 70: microphone
- 80: loudspeaker
- 90: radio interface
- 100: control unit
- 101: eSIM
- 110: GPS unit
- 120: eye tracking unit
- 130: eye
- 131: viewing direction

## Claims

1. A user equipment (10), comprising :
- a radio interface unit (90) for a wireless connection ;
- a human machine interface unit for interacting with a user, the human machine interface unit having a screen (50) for displaying digital data to be seen by the user;
- a control unit (100) for operating the radio interface unit (90) and the human machine interface unit, the control unit (100) being operatively connected to the radio interface unit (90) and the human machine interface ;
- a frame (20) supporting the radio interface unit (90), the human machine interface unit and the control unit (100) ;
- at least one glass (30) defining a field of view (31) of the user equipment (10), the frame (20) supporting the at least one glass (30) and being configured for arranging the at least one glass (30) in front of an eye (130) of the user; and
- a partially reflective lens (40) for reflecting the screen (50) to the eye (130) of the user, wherein the screen (50) is swivel-mounted to the frame (20) and swiveling between an active screen position with a virtual image of the reflected screen (50) overlaying the field of view (31) when the glass (30) is arranged in front of the eye (130) and an inactive screen position with the virtual image of the reflected screen (50) being outside the field of view (31).

2. The user equipment according to claim 1, wherein the at least one glass (30) is configured to be the partially reflective lens (40).

3. The user equipment according to claim 1, wherein the partially reflective lens (40) is separate from the at least one glass (30), swivel-mounted to the frame (20) and swivelling between an active lens position and an inactive lens position corresponding to the active screen position and the inactive screen position, respectively.

4. The user equipment according to claim 3, wherein the partially reflective lens (40) has a reflective coating (41) and/or a protective coating, the reflective coating (41) and/or the protective coating being provided on a surface of the partially reflective lens (40) facing the field of view (31).

5. The user equipment according to one of claims 1 to 4, comprising a pair of glasses (30) being supported by the frame (20) and being arranged next to each other, the frame (20) being a glasses frame having a bridge (21) for abutting a nose of the user.

6. The user equipment according to one of claims 1 to 5, wherein the human machine interface has a microphone (70) for detecting a voice utterance, the microphone (70) being supported by the frame (20).

7. The user equipment according to one of claims 1 to 6, wherein the human machine interface has an eye tracking unit (120) for detecting a viewing direction (131) of the user, the eye tracking unit (120) being supported by the frame (20).

8. The user equipment according to claim 7, wherein the control unit (100) is configured to swivel the screen (50) dependent on the detected viewing direction (131).

9. The user equipment according to one of claims 1 to 8, wherein the human machine interface unit comprises an electric motor for swivelling the screen (50) with respect to the frame (20), the electric motor linking the screen (50) and the frame (20) and/or an electromagnet for swivelling the partially reflective lens (40) with respect to the frame (20).

10. The user equipment according to one of claims 1 to 9, wherein the control unit (100) has an embedded subscriber identification module (101) for a cellular network and/or the radio interface unit (90) is configured for connecting to cellular network and/or for connecting to a Bluetooth device and/or for a near field communication.

11. The user equipment according to one of claims 1 to 10, wherein the radio interface unit (90) is configured for connecting to a WLAN router and/or for being connected to as a WLAN router.

12. The user equipment according to one of claims 1 to 11, comprising a camera (60) for capturing an image of the field of view (31) and/or a GPS unit (110) for detecting a geographical position.

13. A method for operating a user equipment (10), comprising the steps :
- a user equipment (10) according to one of the prececing claims is worn by a user and the radio interface unit (90) of the user equipment (10) establishes a wireless connection ;
- the screen (50) of the human machine interface unit of unit the user equipment (10) is swivelled to the active screen position due to an activating user action or due to a triggering event provided by an internet cloud via the wireless connection ;
- the screen (50) displays digital data provided by the internet cloud ; and
- the screen (50) is swivelled to the inactive screen position due to an inactivating user action or due to a time-out;

14. The method according to claim 13, wherein the partially reflective lens (40) of the user equipment (10) is swivelled to the active lens position and to the inactive lens position, respectively, in a synchronity with the swivelling screen (50).

15. The method according to one of claims 13 or 14, wherein the user equipment (10) is operated by an eye (130) movement defining a viewing direction (131) of the user and being detected by the eye tracking unit (120) of the user equipment (10) and/or by a muscle action being detected by a sensoric clothing worn by the user and being wirelessly connected to the user equipment (10).

## Amended claims

### Amended claims in accordance with Rule 137(2) EPC.

1. A user equipment (10), comprising :
- a radio interface unit (90) for a wireless connection ;
- a human machine interface unit for interacting with a user, the human machine interface unit having a screen (50) for displaying digital data to be seen by the user ;
- a control unit (100) for operating the radio interface unit (90) and the human machine interface unit, the control unit (100) being operatively connected to the radio interface unit (90) and the human machine interface ;
- a frame (20) being a glasses frame having a bridge for abutting a nose of the user and two earpieces for abutting either ear of the user and supporting the radio interface unit (90), the human machine interface unit and the control unit (100) ;
- at least one glass (30) defining a field of view (31) of the user equipment (10), the frame (20) supporting the at least one glass (30) and being configured for arranging the at least one glass (30) in front of an eye (130) of the user; and
- a partially reflective lens (40) for reflecting the screen (50) to the eye (130) of the user, wherein the screen (50) is swivel-mounted to the frame (20) and swiveling between an active screen position with a virtual image of the reflected screen (50) overlaying the field of view (31) when the glass (30) is arranged in front of the eye (130) and an inactive screen position with the virtual image of the reflected screen (50) being outside the field of view (31).

2. The user equipment according to claim 1, wherein the at least one glass (30) is configured to be the partially reflective lens (40).

3. The user equipment according to claim 1, wherein the partially reflective lens (40) is separate from the at least one glass (30), swivel-mounted to the frame (20) and swivelling between an active lens position and an inactive lens position corresponding to the active screen position and the inactive screen position, respectively.

4. The user equipment according to claim 3, wherein the partially reflective lens (40) has a reflective coating (41) and/or a protective coating, the reflective coating (41) and/or the protective coating being provided on a surface of the partially reflective lens (40) facing the field of view (31).

5. The user equipment according to one of claims 1 to 4, comprising a pair of glasses (30) being supported by the frame (20) and being arranged next to each other.

6. The user equipment according to one of claims 1 to 5, wherein the human machine interface has a microphone (70) for detecting a voice utterance, the microphone (70) being supported by the frame (20).

7. The user equipment according to one of claims 1 to 6, wherein the human machine interface has an eye tracking unit (120) for detecting a viewing direction (131) of the user, the eye tracking unit (120) being supported by the frame (20).

8. The user equipment according to claim 7, wherein the control unit (100) is configured to swivel the screen (50) dependent on the detected viewing direction (131).

9. The user equipment according to one of claims 1 to 8, wherein the human machine interface unit comprises an electric motor for swivelling the screen (50) with respect to the frame (20), the electric motor linking the screen (50) and the frame (20) and/or an electromagnet for swivelling the partially reflective lens (40) with respect to the frame (20).

10. The user equipment according to one of claims 1 to 9, wherein the control unit (100) has an embedded subscriber identification module (101) for a cellular network and/or the radio interface unit (90) is configured for connecting to cellular network and/or for connecting to a Bluetooth device and/or for a near field communication.

11. The user equipment according to one of claims 1 to 10, wherein the radio interface unit (90) is configured for connecting to a WLAN router and/or for being connected to as a WLAN router.

12. The user equipment according to one of claims 1 to 11, comprising a camera (60) for capturing an image of the field of view (31) and/or a GPS unit (110) for detecting a geographical position.

13. A method for operating a user equipment (10), comprising the steps :
- a user equipment (10) according to one of the prececing claims is worn by a user and the radio interface unit (90) of the user equipment (10) establishes a wireless connection ;
- the screen (50) displays digital data provided by an internet cloud via the wireless connection ;
- the screen (50) of the human machine interface unit of unit the user equipment (10) is swivelled to the active screen position due to an activating user action or due to a triggering event provided by the internet cloud ;
- the screen (50) is swivelled to the inactive screen position due to an inactivating user action or due to a time-out;

14. The method according to claim 13, wherein the partially reflective lens (40) of the user equipment (10) is swivelled to the active lens position and to the inactive lens position, respectively, in a synchronity with the swivelling screen (50).

15. The method according to one of claims 13 or 14, wherein the user equipment (10) is operated by an eye (130) movement defining a viewing direction (131) of the user and being detected by the eye tracking unit (120) of the user equipment (10) and/or by a muscle action being detected by a sensoric clothing worn by the user and being wirelessly connected to the user equipment (10).
